# EUROPEAN PATENT SPECIFICATION

(11) **EP 3 417 990 B1**
(45) Date of publication and mention of the grant of the patent: **25.03.2020**
(21) Application number: 18175799.8
(22) Date of filing: 04.06.2018
(51) Int. Cl.: B23P 15/00, B23P 23/04, B21K 23/00, B23D 11/00, B23D 13/00, B23D 3/02

(54) **MANUFACTURING METHOD OF METAL MEMBER**
VERFAHREN ZUR HERSTELLUNG EINES METALLELEMENTS
PROCÉDÉ DE FABRICATION D'UN ÉLÉMENT MÉTALLIQUE

(30) Priority: 21.06.2017 JP 2017121459
(43) Date of publication of application: 26.12.2018
(73) Proprietor: Toyota Jidosha Kabushiki Kaisha, Aichi-Ken 471-8571 (JP)
(72) Inventor: EGAWA, Tetsuji, Aichi-ken, 471-8571 (JP)
(74) Representative: D Young & Co LLP

(56) References cited:
- WO-A1-2010/099409
- WO-A1-2017/100665
- GB-A- 912 095
- JP-A- 2000 042 819
- JP-A- 2001 191 220
- JP-A- 2002 326 117
- JP-A- 2006 123 054
- JP-A- 2010 089 235
- US-A- 6 145 365
- US-A1- 2001 018 792

## Description

### BACKGROUND OF THE INVENTION

### 1. Field of the Invention

The present invention relates to a manufacturing method of a metal member according to the preamble of claim 1. Such a method is disclosed in US 6,145,365.

### 2. Description of Related Art

For energy conservation, members used in a vehicle are required to be further reduced in weight. Thus, a processing technique in which the thickness of a region where the needed strength is relatively low is reduced to be smaller than the thickness of other regions is reviewed. Japanese Unexamined Patent Application Publication No. 2014-166641 (JP 2014-166641 A) discloses a technique of partially reducing the thickness of a plate by using rolling mill rolls.

### SUMMARY OF THE INVENTION

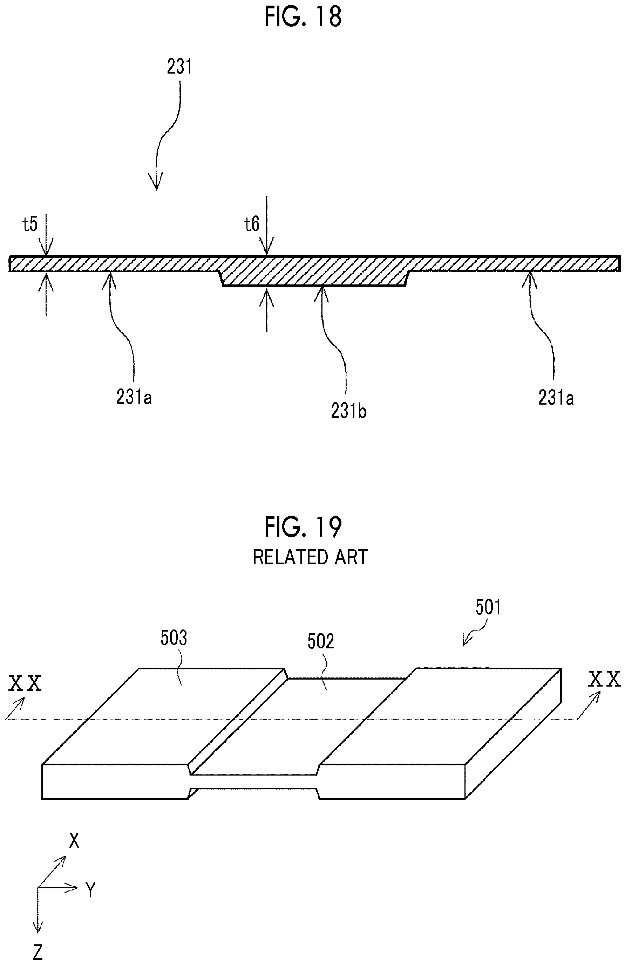

FIGS. 19 to 24 are schematic views illustrating a manufacturing method of a metal member according to the problem to be solved by the invention. The right-hand xyz coordinate system illustrated in the drawings is an example for describing the positional relationships of constituent elements.

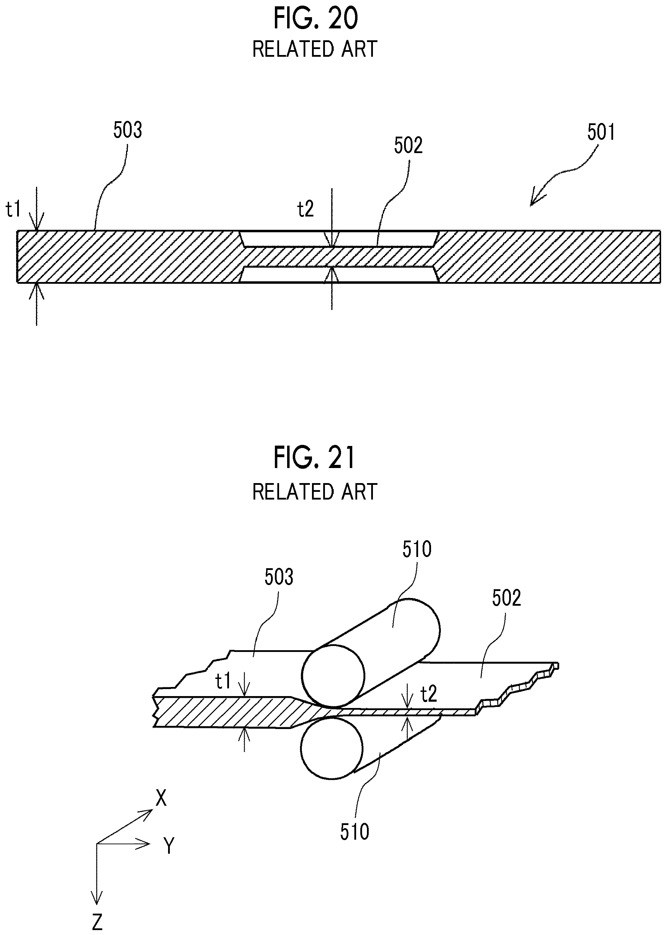

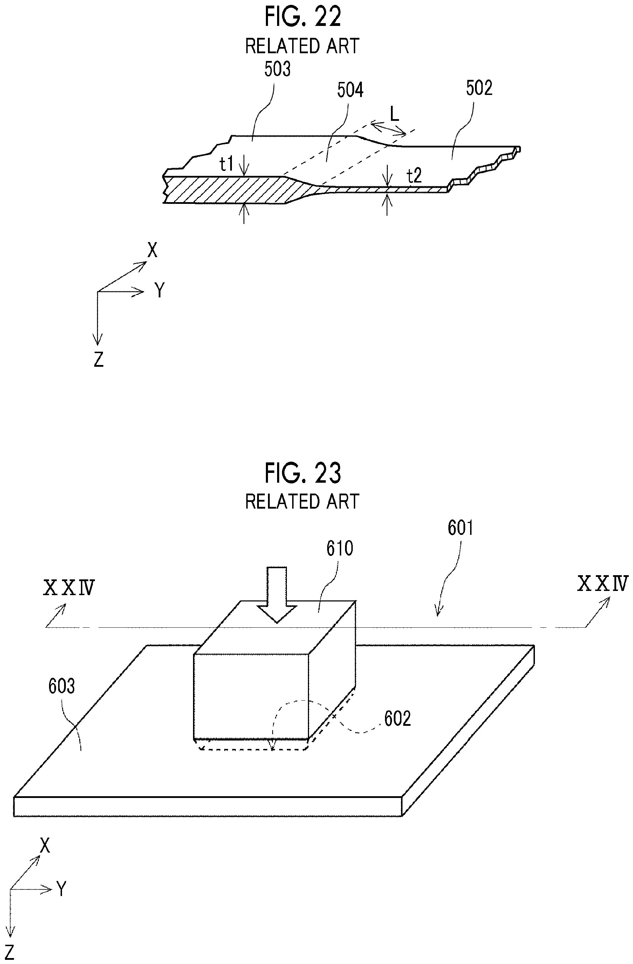

FIG. 19 is a perspective view illustrating an example of an appearance of a plate-shaped metal member of which the thickness of a region where the needed strength is relatively low is reduced to be smaller than the thickness of other regions. FIG. 20 is a sectional view taken along line XX-XX in FIG. 19. As illustrated in FIG. 19 and FIG. 20, a thin portion 502 of which the thickness is smaller than the thickness of other regions of a metal member 501 is formed at the central portion of the metal member 501. That is, the thickness t2 of the thin portion 502 is smaller than the thickness t1 of other portions 503 (t2 < t1). Processing is considered to be performed on the thin portion 502 of the metal member 501 by using a pair of rolling mill rolls 510 as illustrated in FIG. 21. That is, a central portion of a metallic plate as a raw material is sandwiched between the rolling mill rolls 510, and the thickness of the central portion is reduced. However, when the thin portion 502 is processed by the rolling mill rolls 510, as illustrated in FIG. 22, a gradual-change region 504 of which the plate thickness is gradually changed is generated. It is known that the length L of the gradual-change region 504 is about 100 mm when the plate thickness is reduced by 1 mm (that is, the thickness difference (t1 - t2) is 1 mm). The thickness of the gradual-change region 504 is greater than the target thickness t2. Therefore, when the metal member 501 is processed by the rolling mill rolls 510, the reduction in weight is insufficient.

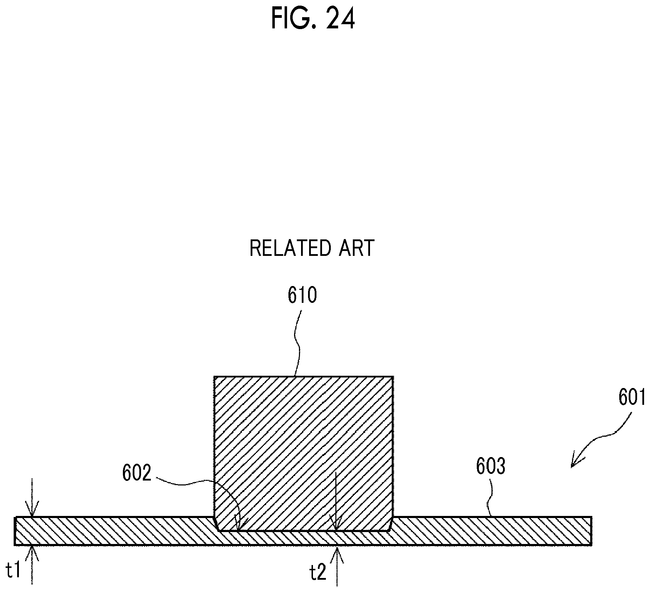

FIG. 23 is a perspective view illustrating a manufacturing method in which a plate-shaped metal member of which the thickness of a region where the needed strength is relatively low is reduced to be smaller than the thickness of other regions is processed by forging. FIG. 24 is a sectional view taken along line XXIV-XXIV in FIG. 23. As illustrated in FIG. 23 and FIG. 24, a thin portion 602 at the central portion of a metal member 601 is formed by forging using a press die 610. In doing so, the pressing load applied to the press die 610 is required to be much greater than the load required in drawing processing. Thus, the processing equipment becomes large, and therefore, forming a thin portion by forging is not preferable in terms of energy conservation. In addition, since the degree of hardness of the thin portion 602 is increased after the forging (work hardening), the ductility of the thin portion 602 is reduced. Therefore, additional treatments such as annealing and oxidized scale removing are necessary after the forging. Since the spring back at the part where the forging is performed becomes large, it is not easy to accurately form a desired shape by the forging.
The invention provides a manufacturing method of a metal member in which the thickness of a region of a metal plate is reduced to be smaller than the thickness of other regions while the work hardening is suppressed.
The aspect invention relates to a manufacturing method of a metal member according to claim 1.

The manufacturing method according to the invention includes pressing the first surface by a press die such that a recess and a projection are respectively formed on the first surface and a second surface of the metal plate, the first surface and the second surface being perpendicular to the thickness direction of the metal plate. The first shaving is performed by moving the cutting edge in a direction along the first surface of the metal plate such that the first surface has the same plane with a bottom of the recess. According to the invention, the thickness of a region of the metal plate is reduced to be smaller than the thickness of other regions of the metal plate while work hardening is suppressed.

The manufacturing method according to the aspect of the invention may further include performing second shaving on a second surface perpendicular to the thickness direction of the metal plate, in the first portion of the metal plate by moving the cutting edge in a direction along the second surface perpendicular to the thickness direction of the metal plate.

According to the aspect of the invention, a thin portion that is relatively thin can be formed according to the design condition, and the reduction in weight of the metal member can efficiently be achieved.

In the manufacturing method according to the aspect of the invention, the cutting edge may have a shape in which a curved portion is formed on a boundary between the first portion and the second portion of the metal plate, and the curved portion is formed along the boundary.

According to the aspect of the invention, it is possible to provide a manufacturing method of a metal member in which the thickness of a region of the metal plate is reduced to be smaller than the thickness of other regions of the metal plate while work hardening is suppressed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view schematically illustrating a configuration of a processing apparatus used in a manufacturing method of a metal member according to Embodiment 1;
FIG. 2 is a perspective view schematically illustrating the manufacturing method of the metal member according to Embodiment 1;
FIG. 3 is a perspective view schematically illustrating the manufacturing method of the metal member according to Embodiment 1;
FIG. 4 is a graph illustrating inspection results for work hardness of a thin portion of the metal member manufactured by the manufacturing method of the metal member according to Embodiment 1;
FIG. 5 is a perspective view illustrating a modification example of the metal member obtained by the manufacturing method of the metal member according to Embodiment 1;
FIG. 6 is a perspective view illustrating another modification example of the metal member obtained by the manufacturing method of the metal member according to Embodiment 1;
FIG. 7 is a perspective view illustrating still another modification example of the metal member obtained by the manufacturing method of the metal member according to Embodiment 1;
FIG. 8 is a flowchart illustrating a manufacturing method of a metal member according to Embodiment 2;
FIG. 9 is a schematic view illustrating the manufacturing method of the metal member according to Embodiment 2;
FIG. 10 is a schematic view illustrating the manufacturing method of the metal member according to Embodiment 2;
FIG. 11 is a schematic view illustrating the manufacturing method of the metal member according to Embodiment 2;
FIG. 12 is a schematic view illustrating the manufacturing method of the metal member according to Embodiment 2;
FIG. 13 is a schematic view illustrating the manufacturing method of the metal member according to Embodiment 2;
FIG. 14 is a schematic view illustrating the manufacturing method of the metal member according to Embodiment 2;
FIG. 15 is a schematic view illustrating the manufacturing method of the metal member according to Embodiment 2;
FIG. 16 is a schematic view illustrating a modification example of the manufacturing method of the metal member according to Embodiment 2, and in accordance with the invention;
FIG. 17 is a schematic view illustrating the modification example of the manufacturing method of the metal member according to Embodiment 2, and in accordance with the invention;
FIG. 18 is a schematic view illustrating the modification example of the manufacturing method of the metal member according to Embodiment 2, and in accordance with the invention;
FIG. 19 is schematic view illustrating a manufacturing method of a metal member according to the problem to be solved by the invention;
FIG. 20 is schematic view illustrating the manufacturing method of the metal member according to the problem to be solved by the invention;
FIG. 21 is schematic view illustrating the manufacturing method of the metal member according to the problem to be solved by the invention;
FIG. 22 is schematic view illustrating the manufacturing method of the metal member according to the problem to be solved by the invention;
FIG. 23 is schematic view illustrating the manufacturing method of the metal member according to the problem to be solved by the invention; and
FIG. 24 is schematic view illustrating the manufacturing method of the metal member according to the problem to be solved by the invention.

### DETAILED DESCRIPTION OF EMBODIMENTS

Hereinafter, specific embodiments to which the invention is applied will be described in detail with reference to the drawings. However, the invention is not limited to the following embodiments, but it is instead limited by the claims. In addition, for clearly describing embodiments, the following description and drawings are appropriately simplified.

### Embodiment 1

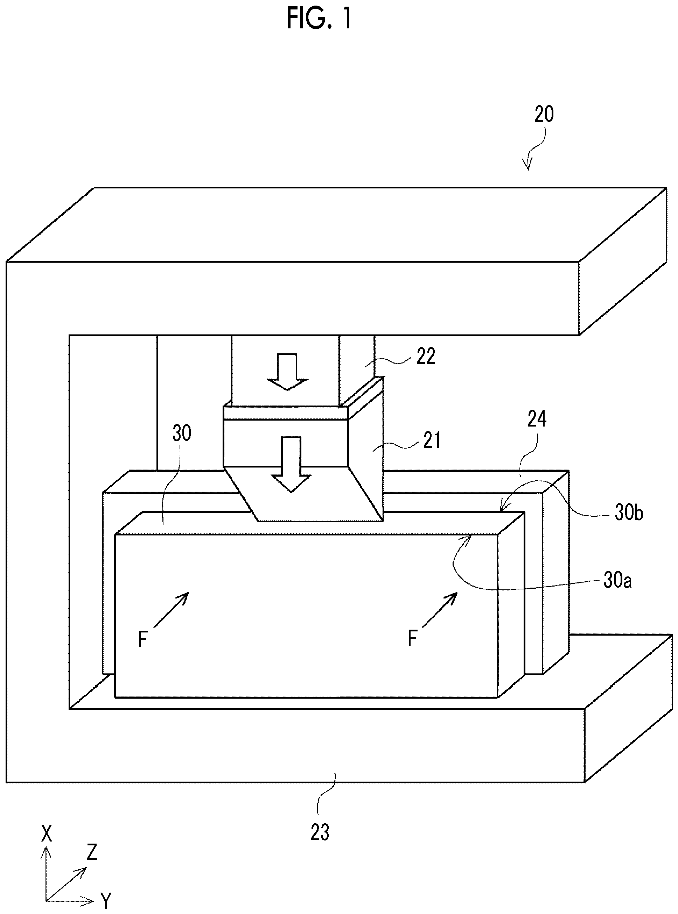

The configuration of a processing apparatus 20 used in a manufacturing method of a metal member according to Embodiment 1 and not in accordance with the invention will be described with reference to FIG. 1. Specifically, the processing apparatus 20 is a press apparatus. FIG. 1 is a perspective view schematically illustrating the configuration of the processing apparatus 20 used in the manufacturing method of the metal member according to Embodiment 1. The right-hand xyz coordinate system illustrated in FIG. 1 is an expedient for describing the positional relationships of constituent elements.

As illustrated in FIG. 1, the processing apparatus 20 includes a cutting edge 21, a slide 22, a main body 23, and a fixing stand 24. The slide 22 is attached to the main body 23 to be movable in an up-down direction (X-axis direction). The cutting edge 21 is a tool for shaving a metal plate 30, and is attached to a tip end of the slide 22. The metal plate 30 is a plate formed of a base metal such as aluminum, stainless, iron, titanium, and magnesium. The fixing stand 24 is for fixing the metal plate 30, and is attached to the main body 23. For fixing the metal plate 30 to the fixing stand 24, press force F is applied to the metal plate 30 in the plus side of a Z-axis direction.

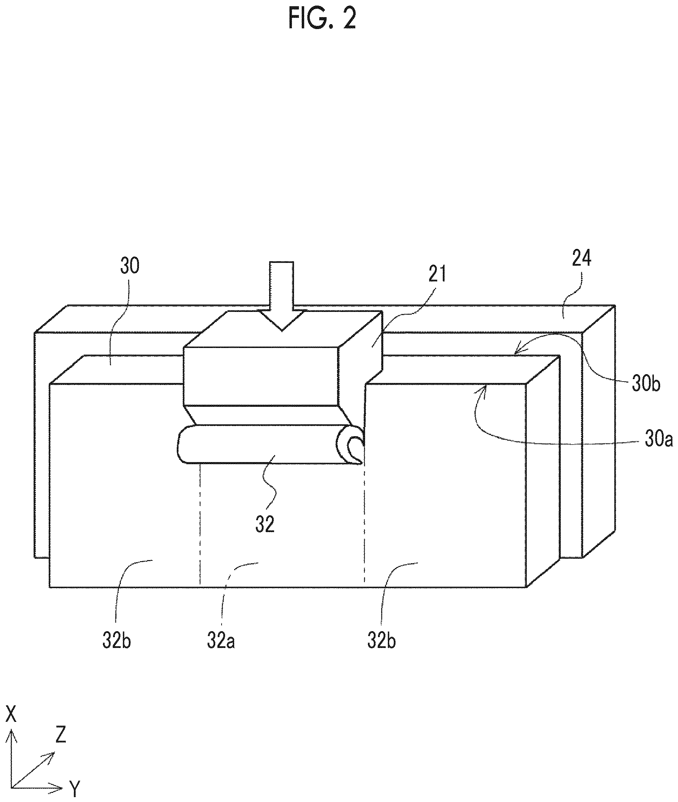

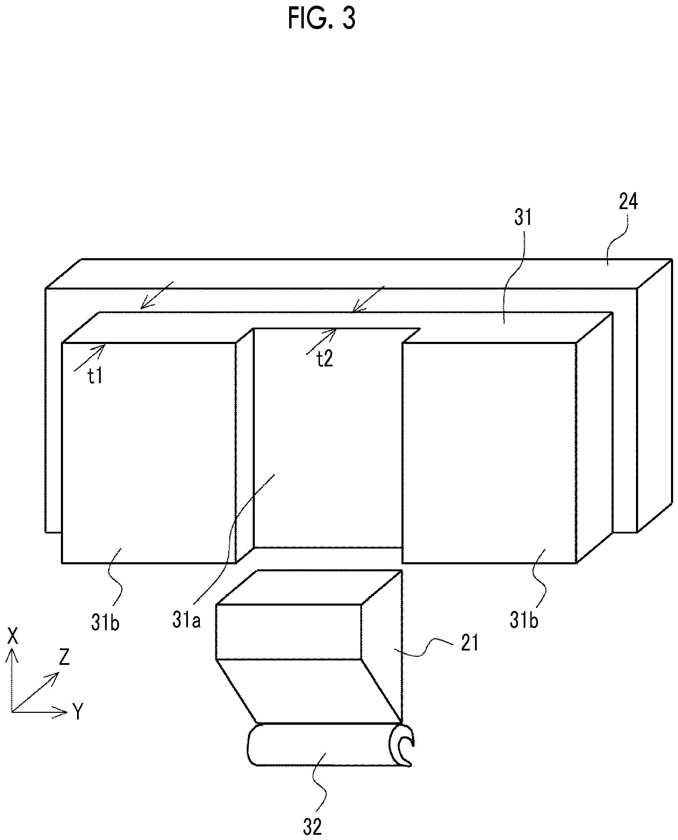

The manufacturing method of a metal member 31 will be described with reference to FIG. 1 to FIG. 3. FIG. 2 and FIG. 3 are perspective views schematically illustrating the manufacturing method of the metal member 31. The right-hand xyz coordinate system illustrated in FIG. 2 and FIG. 3 is the same as the right-hand xyz coordinate system in FIG. 1. In addition, for the convenience of description, in FIG. 2 and FIG. 3, only the cutting edge 21 and the fixing stand 24 of the processing apparatus 20 are illustrated, and other constituent elements of the processing apparatus 20 other than the cutting edge 21 and the fixing stand 24 are not illustrated.

As illustrated in FIG. 1, the metal plate 30 is disposed to be fixed to the fixing stand 24 such that the thickness direction of the metal plate 30 matches the Z-axis direction. That is, a first surface 30a and a second surface 30b of the metal plate 30 are perpendicular to the thickness direction of the metal plate 30, the first surface 30a is on the minus side of the Z-axis direction, the second surface 30b is on the plus side of the Z-axis direction, and the second surface 30b faces the fixing stand 24. The slide 22, the tip end of which the cutting edge 21 is attached to, is moved with respect to the metal plate 30 disposed as described above, in a downward direction (the minus side of the X-axis direction).

When the slide 22 is moved as described above, as illustrated in FIG. 2, the cutting edge 21 is moved in a direction along the first surface 30a perpendicular to the thickness direction of the metal plate 30, and thus the cutting edge 21 acts on the metal plate 30, thereby performing first shaving on the first surface 30a in a first portion 32a of the metal plate 30. The first shaving is one kind of shearing performed by the press apparatus, and is processing of shaving the surface of the metal plate such that the metal plate becomes thin (for example, shaving the metal plate by an amount corresponding to 5% or less of the plate thickness). That is, by the first shaving, the first surface 30a in the first portion 32a of the metal plate 30 is shaved in a layered shape, and thus the thickness of the first portion 32a becomes smaller than the thickness of second portions 32b. A scrap 32 illustrated in FIG. 3 is a cutting chip which is shaved off from the first surface 30a in the first portion 32a of the metal plate 30.

In a case where the first shaving on the first surface 30a in the first portion 32a of the metal plate 30 is completed, the metal member 31 illustrated in FIG. 3 is obtained. The metal member 31 has a thin portion 31a that is relatively thin (corresponding to the first portion 32a of the metal plate 30 in FIG. 2), and thick portions 31b that are relatively thick (corresponding to the second portions 32b of the metal plate 30 in FIG. 2). That is, the thickness t2 of the thin portion 31a is smaller than the thickness t1 of the thick portions 31b (t2 < t1).

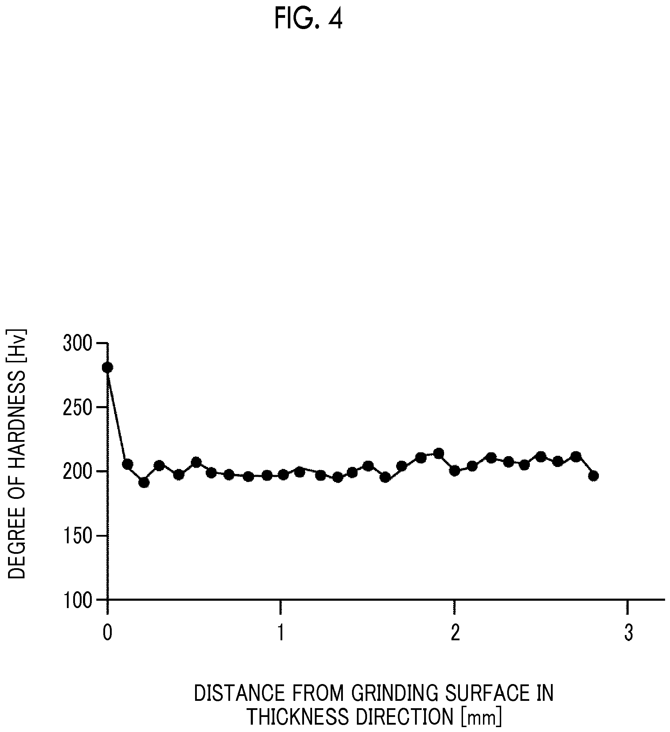

FIG. 4 is a graph illustrating inspection results for work hardness of the thin portion 31a of the metal member 31 manufactured by the manufacturing method of the metal member according to Embodiment 1. Here, the horizontal axis indicates the distance [mm] from the grinding surface in the thin portion 31a in the thickness direction, and the vertical axis indicates degrees of hardness [Hv]. As illustrated in FIG. 4, the degree of hardness is slightly high in a microlayer close to the grinding surface in the thin portion 31a, but work hardening is not generated in the succeeding layers of the microlayer close to the grinding surface in the thin portion 31a. Therefore, it is not necessary to perform additional treatments such as annealing and oxidized scale removing for improving characteristics of the metal member.

With the manufacturing method of the metal member according to Embodiment 1, the thickness of a region of a metal plate can be reduced to be smaller than the thickness of other regions of the metal plate while work hardening is suppressed.

In principle, it is possible to form a thin portion of a metal member by shaving a surface perpendicular to the thickness direction, in a portion of a metal plate by using an end mill that is one kind of a milling cutter. However, it is not easy to accurately form the thin portion of the metal member by using an end mill, and it takes time for the processing. In a case where the thin portion of the metal member is formed by shaving as in Embodiment 1, time for the processing can be greatly shortened compared to a case where the thin portion of the metal member is formed by using an end mill.

In a case where the thin portion of the metal member is processed by using the end mill, a fine cutting chip, which is called facet, is generated. Since the facet is fine, when the facet is input into a furnace, the facet may flutter due to an air stream generated by heat in the furnace, and therefore it is difficult to reuse the facet. In a case where the thin portion of the metal member is processed by shaving, as illustrated in FIG. 3, since the scrap 32 as a cutting chip has a large size to some extent, the scrap 32 is highly reusable without fluttering when the scrap 32 is input into the furnace.

### Modification Example 1

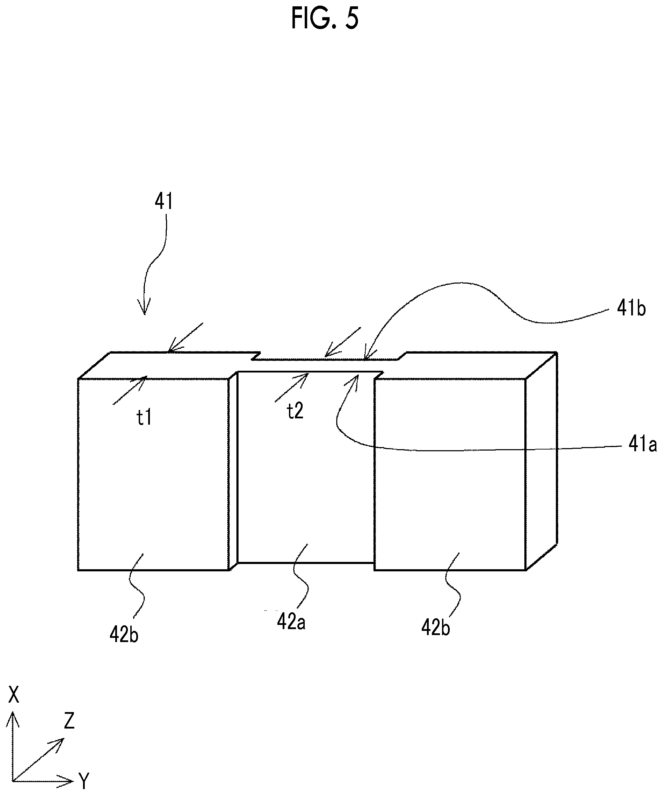

FIG. 5 is a perspective view illustrating a modification example of the metal member obtained by the manufacturing method of the metal member according to Embodiment 1 and not in accordance with the invention. The right-hand xyz coordinate system illustrated in FIG. 5 is the same as the right-hand xyz coordinate system in FIG. 1. As illustrated in FIG. 5, a first surface 41a and a second surface 41b of a metal member 41 according to Modification Example 1 are perpendicular to the thickness direction of the metal member 41, first shaving and second shaving are performed on both the first surface 41a and the second surface 41b, and thus a thin portion 42a that is relatively thin and thick portions 42b that are relatively thick are formed in the metal member 41. With the manufacturing method of the metal member according to Embodiment 1, the thin portion that is relatively thin can be formed according to the design condition, and the reduction in weight of the metal member can efficiently be achieved.

### Modification Example 2

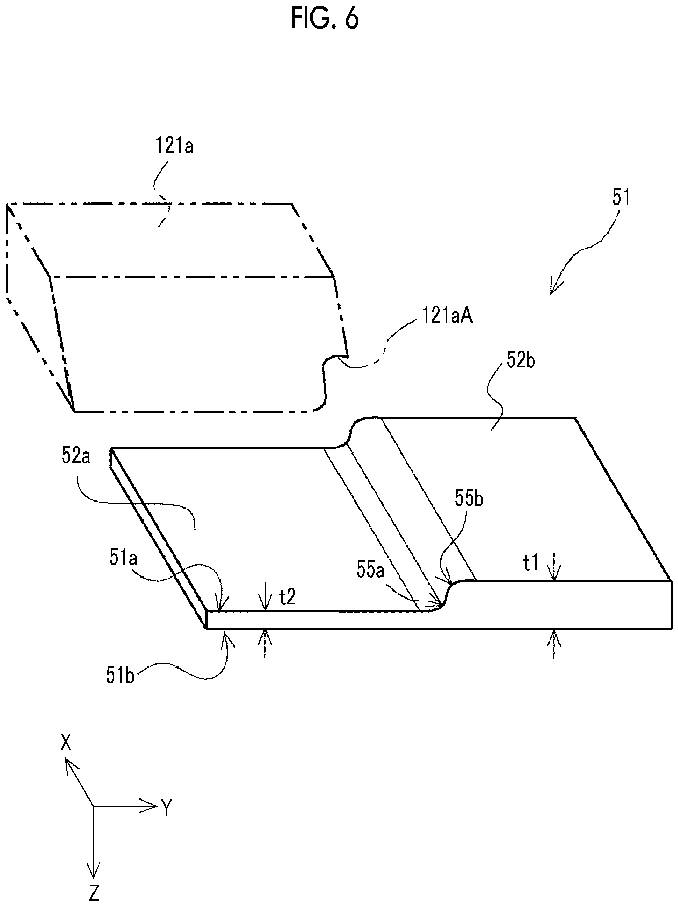

FIG. 6 is a perspective view illustrating another modification example of the metal member obtained by the manufacturing method of the metal member according to Embodiment 1 and not in accordance with the invention. The right-hand xyz coordinate system illustrated in FIG. 6 is the same as the right-hand xyz coordinate system in FIG. 1. As illustrated in FIG. 6, a first surface 51a and a second surface 51b of a metal member 51 according to Modification Example 2 are perpendicular to the thickness direction of the metal member 51, first shaving is performed on the first surface 51a out of the first surface 51a and the second surface 51b, and thus a thin portion 52a that is relatively thin and a thick portion 52b that is relatively thick are formed in the metal member 51. Two R portions 55a, 55b are formed on the boundary between the thin portion 52a and the thick portion 52b. A cutting edge 121a used for forming the metal member 51 has an R-portion forming portion 121aA corresponding to the two R portions 55a, 55b. With the manufacturing method of the metal member according to Embodiment 1, the thin portion that is relatively thin can be formed according to the design condition, and the reduction in weight of the metal member can efficiently be achieved.

### Modification Example 3

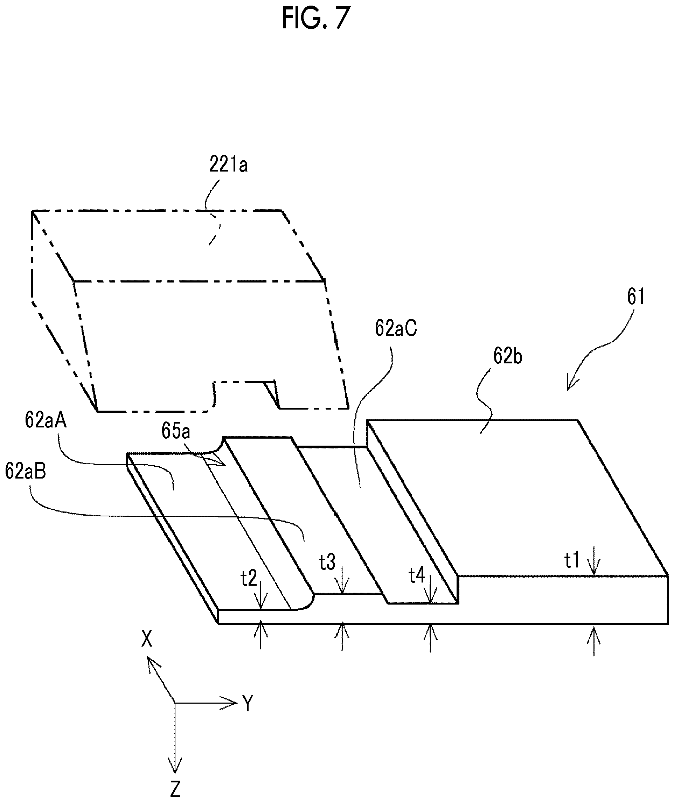

FIG. 7 is a perspective view illustrating still another modification example of the metal member obtained by the manufacturing method of the metal member according to Embodiment 1and not in accordance with the invention. As illustrated in FIG. 7, a metal member 61 according to Modification Example 3 has a plurality of thin portions 62aA, 62aB, 62aC that is relatively thin, and a thick portion 62b that is relatively thick. An R portion 65a may be formed on the boundary between the thin portion 62aA and the thin portion 62aB. The plate thickness t2 of the thin portion 62aA, the plate thickness t3 of the thin portion 62aB, and the plate thickness t4 of the thin portion 62aC may be different from each other. A cutting edge 221a used for forming the metal member 61 has a shape corresponding to the thin portions 62aA, 62aB, 62aC that are relatively thin. With the manufacturing method of the metal member according to Embodiment 1, the thin portion that is relatively thin can be formed according to the design condition, and the reduction in weight of the metal member can efficiently be achieved.

### Embodiment 2

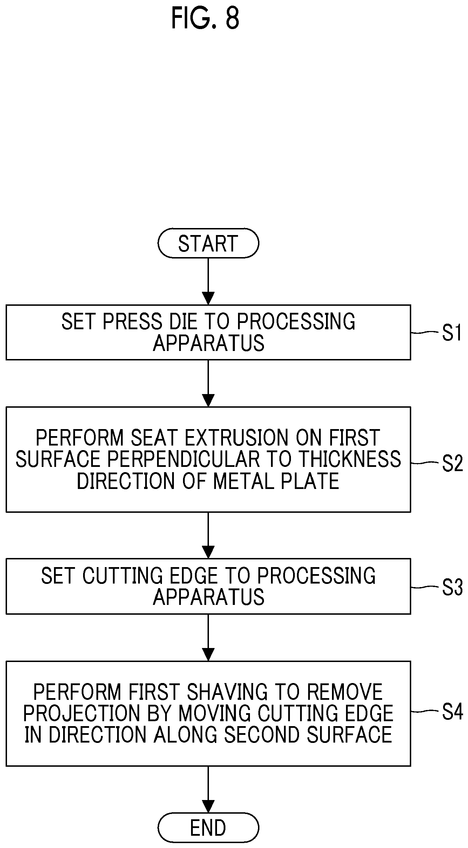

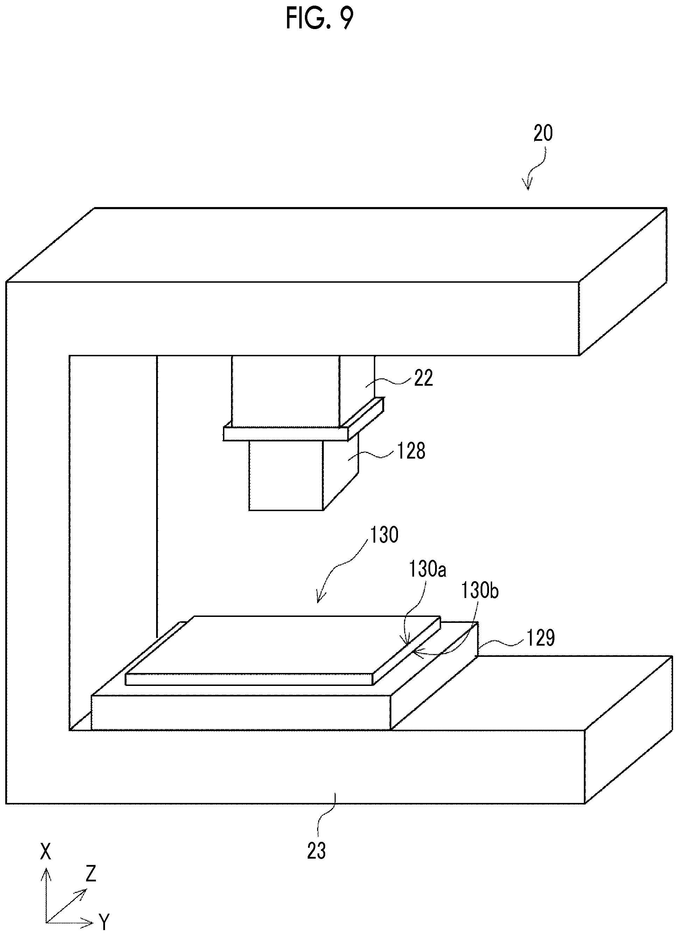

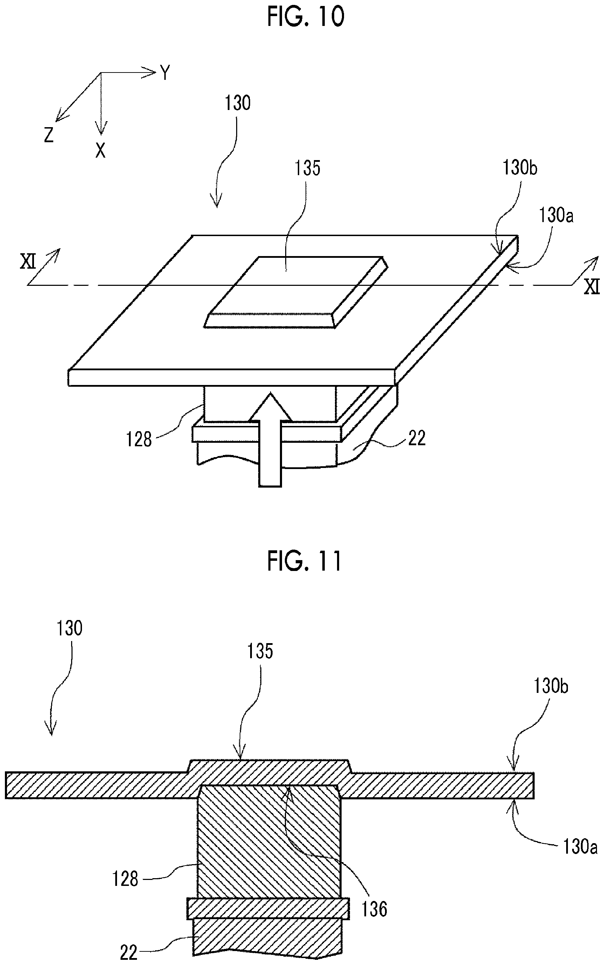

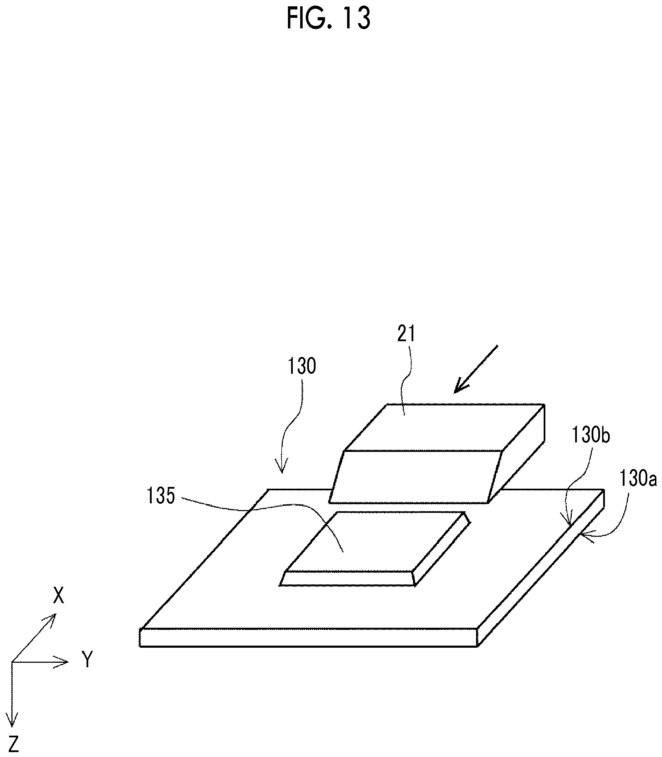

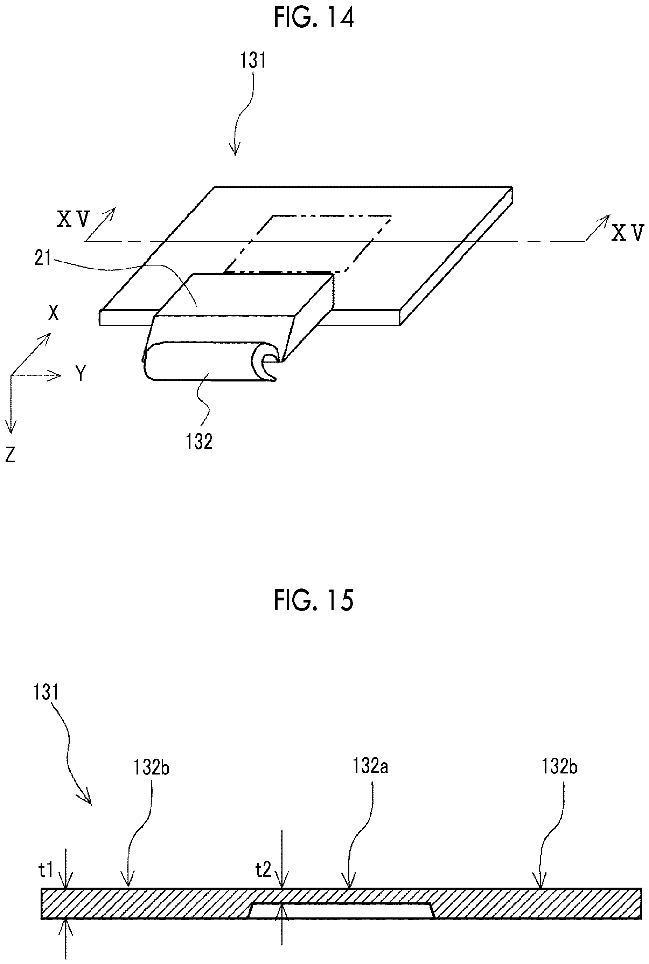

A manufacturing method of a metal member according to Embodiment 2 and not in accordance with the invention will be described with reference to FIG. 8 to FIG. 15. A processing apparatus used in the manufacturing method of the metal member according to Embodiment 2 is a press apparatus that is basically the same as the processing apparatus 20 described in Embodiment 1 with reference to FIG. 1. FIG. 8 is a flowchart illustrating the manufacturing method of the metal member according to Embodiment 2. FIG. 9 to FIG. 15 are schematic views illustrating the manufacturing method of the metal member according to Embodiment 2. The right-hand xyz coordinate system illustrated in FIG. 9, FIG. 10, and FIG. 12 to FIG. 14 is the same as the right-hand xyz coordinate system in FIG. 1. In addition, for the convenience of description, in FIG. 10 and FIG. 11, only a press die 128 and the slide 22 of the processing apparatus 20 are illustrated, and other constituent elements of the processing apparatus 20 other than the press die 128 and the slide 22 are not illustrated. Furthermore, for the convenience of description, in FIG. 13 and FIG. 14, only the cutting edge 21 of the processing apparatus 20 is illustrated, and other constituent elements of the processing apparatus 20 other than the cutting edge 21 are not illustrated.

As illustrated in FIG. 8 and FIG. 9, first, press dies 128, 129 are set to the processing apparatus 20 (step S1). Specifically, the press die 128 is attached to the tip end of the slide 22, the press die 129 is disposed below the press die 128 so as to face the press die 128, and a metal plate 130 is disposed on the press die 129. Here, a first surface 130a and a second surface 130b of the metal plate 130 are perpendicular to the thickness direction of the metal plate 130, the first surface 130a faces the press die 128, and the second surface 130b faces the press die 129. A notch corresponding to the outer shape of the press die 128 is formed at the central portion of a surface, which faces the press die 128, of the press die 129.

As illustrated in FIG. 8 and FIG. 10, seat extrusion is performed on a first surface of the metal plate 130, the surface being perpendicular to the thickness direction of the metal plate 130 (step S2). Specifically, the slide 22 is moved in the downward direction (the minus side of the X-axis direction), and thus the first surface 130a is pressed by the press die 128. FIG. 11 is a sectional view taken along line XI-XI in FIG. 10. As illustrated in FIG. 11, in the metal plate 130, a recess 136 is formed on the first surface 130a, and a projection 135 is formed on the second surface 130b.

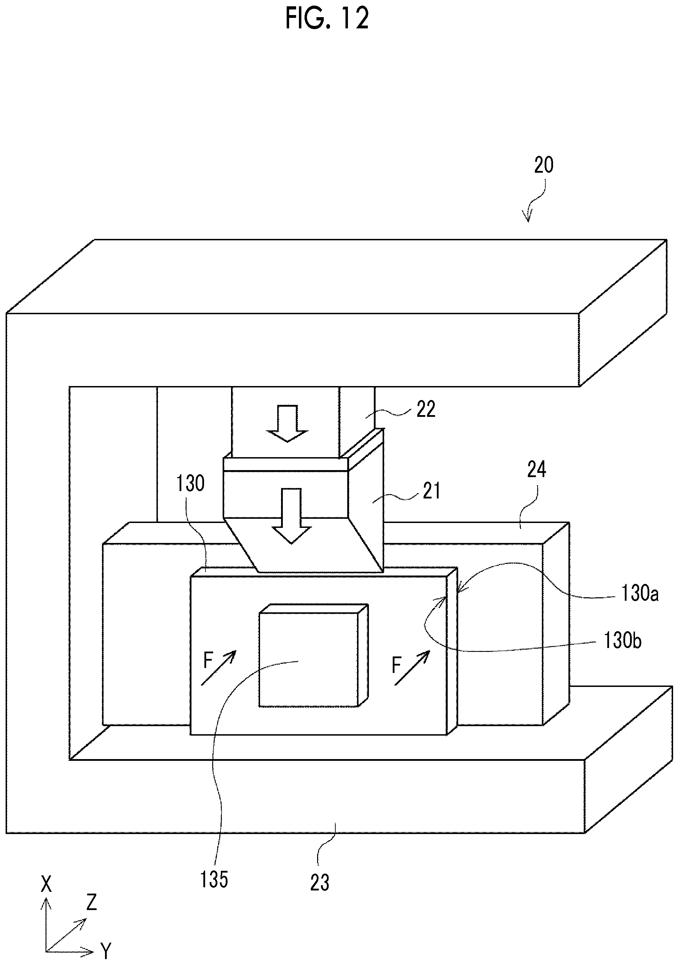

As illustrated in FIG. 8 and FIG. 12, the cutting edge 21 is set to the processing apparatus 20 (step S3). Specifically, a tool on the tip end of the slide 22 is replaced with the cutting edge 21, the metal plate 130, in which the recess 136 is formed on the first surface 130a (refer to FIG. 11) and the projection 135 is formed on the second surface 130b, is disposed to be fixed to the fixing stand 24 such that the thickness direction of the metal plate 130 matches the Z-axis direction. For fixing the metal plate 130 to the fixing stand 24, press force F is applied to the metal plate 130 in the plus side of the Z-axis direction.

As illustrated in FIG. 8 and FIG. 13, the cutting edge 21 is moved in a direction along the second surface 130b, and thereby the projection 135 is removed by first shaving (step S4). In this manner, a metal member 131 illustrated in FIG. 14 is obtained. The projection 135 (refer to FIG. 13) removed by the first shaving becomes a scrap 132 as a cutting chip, as illustrated in FIG. 14. Since the scrap 132 has a large size to some extent, the scrap 132 is highly reusable without fluttering when the scrap 132 is input into the furnace.

FIG. 15 is a sectional view taken along line XV-XV in FIG. 14. As illustrated in FIG. 15, after the projection 135 (refer to FIG. 13) is removed by the first shaving, the metal member 131 having a thin portion 132a that is relatively thin (thickness t2) and thick portions 132b that are relatively thick (thickness t1) is obtained (t2 < t1).

With the manufacturing method of the metal member according to Embodiment 2, the thickness of a region of a metal plate can be reduced to be smaller than the thickness of other regions of the metal plate while work hardening is suppressed.

### Modification Example 4

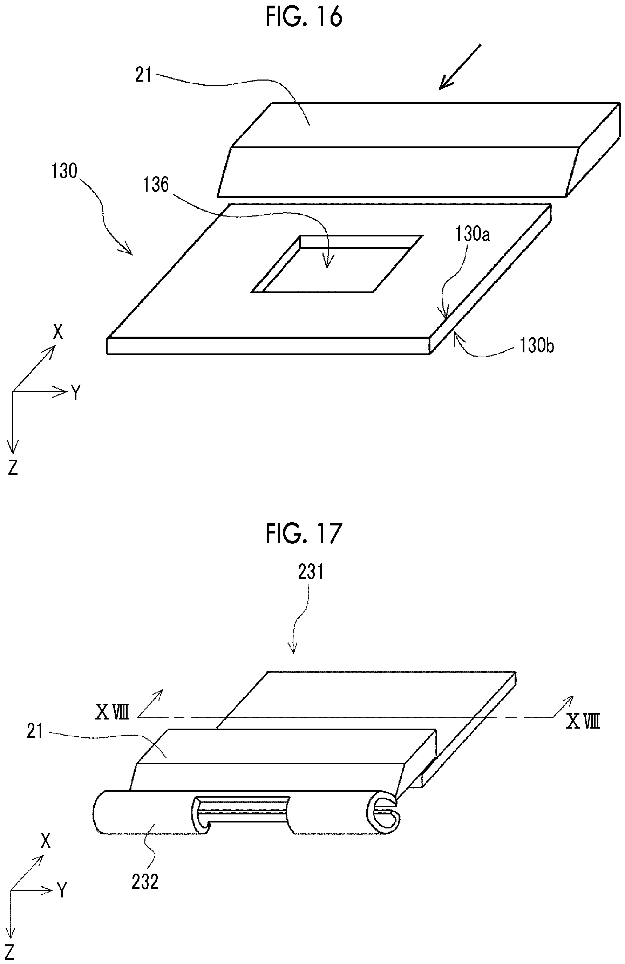

FIG. 16 to FIG. 18 are schematic views illustrating a modification example of the manufacturing method of the metal member according to Embodiment 2, and in accordance with the invention. The processing flow in the manufacturing method of the metal member according to this modification example is different only in step S4 from the processing flow in the manufacturing method of the metal member illustrated in FIG. 8. That is, in step S4 in FIG. 8, the cutting edge 21 is moved in a direction along the second surface 130b, and thereby the projection 135 is removed by the first shaving, but as illustrated in FIG. 16, the cutting edge 21 is moved in a direction along the first surface 130a, and thereby the first shaving is performed such that the first surface 130a has the same plane with the bottom of the recess 136. In this manner, a metal member 231 illustrated in FIG. 17 is obtained. As illustrated in FIG. 17, since a scrap 232 as a cutting chip has a large size to some extent, the scrap 232 is highly reusable without fluttering when the scrap 232 is input into the furnace.

FIG. 18 is a sectional view taken along line XVIII-XVIII in FIG. 17. As illustrated in FIG. 18, after portions other than the recess 136 on the first surface 130a are removed by the first shaving, a metal member 231 having thin portions 231a that are relatively thin (thickness t5) and a thick portion 231b that is relatively thick (thickness t6) is obtained (t5 < t6).

The invention is not limited to the embodiments described above, and can appropriately be modified in a range not departing from the scope of the claims.

## Claims

1. A manufacturing method of a metal member, the manufacturing method comprising pressing a first surface (130a) of the metal member by a press die such that a recess (136) and a projection (135) are respectively formed on the first surface (130a) and a second surface (130b) of a metal plate (130), the first surface (130a) and the second surface (130b) being perpendicular to a thickness direction of the metal plate (130), the method **characterised in that** it further comprises performing a first shaving on the first surface (130a) of the metal member perpendicular to the thickness direction of the metal plate (130), in a first portion (132a) of the metal plate (130) by moving a cutting edge in a direction along the first surface (130a) such that the first surface (130a) has the same plane as a bottom of the recess (136),
wherein in the metal plate (130), a thickness of the first portion (132a) is reduced to be smaller than a thickness of a second portion (132b) by the first shaving.

2. The manufacturing method according to claim 1, further comprising performing a second shaving on the second surface (130b) perpendicular to the thickness direction of the metal plate (130), in the first portion (132a) of the metal plate, by moving the cutting edge in a direction along the second surface (130b) perpendicular to the thickness direction of the metal plate.

3. The manufacturing method according to claim 1, wherein the cutting edge (21) has a shape in which a curved portion (55a, 55b, 65a) is formed on a boundary between the first portion (132a), and the second portion (132b) of the metal plate (130), and the curved portion (55a, 55b, 65a) is formed along the boundary.

## Patentansprüche

1. Verfahren zur Herstellung eines Metallelements, wobei das Herstellungsverfahren das Pressen einer ersten Fläche (130a) des Metallelements durch einen Prägestempel auf eine solche Weise umfasst, dass eine Ausnehmung (136) und ein Vorsprung (135) jeweils auf der ersten Fläche (130a) und einer zweiten Fläche (130b) einer Metallplatte (130) ausgebildet werden, wobei die erste Fläche (130a) und die zweite Fläche (130b) rechtwinklig zu einer Dickenrichtung der Metallplatte (130) verlaufen,
wobei das Verfahren **dadurch gekennzeichnet ist, dass** es ferner das Durchführen eines ersten Schabens auf der ersten Fläche (130a) des Metallelements rechtwinklig zu der Dickenrichtung der Metallplatte (130) in einem ersten Abschnitt (132a) der Metallplatte (130) durch das Bewegen einer Schneidkante in einer Richtung entlang der ersten Fläche (130a) auf eine solche Weise umfasst, dass die erste Fläche (130a) die gleiche Ebene wie ein Boden der Ausnehmung (136) aufweist,
wobei in der Metallplatte (130) eine Dicke des ersten Abschnitts (132a) so reduziert wird, dass sie durch das erste Schaben kleiner als eine Dicke eines zweiten Abschnitts (132b) ist.

2. Herstellungsverfahren nach Anspruch 1, ferner umfassend das Durchführen eines zweiten Schabens auf der zweiten Fläche (130b) rechtwinklig zu der Dickenrichtung der Metallplatte (130) in dem ersten Abschnitt (132a) der Metallplatte durch Bewegen der Schneidkante in einer Richtung entlang der zweiten Fläche (130b) rechtwinklig zu der Dickenrichtung der Metallplatte.

3. Herstellungsverfahren nach Anspruch 1, wobei die Schneidkante (21) eine Form aufweist, bei der an einer Grenze zwischen dem ersten Abschnitt (132a) und dem zweiten Abschnitt (132b) der Metallplatte (130) ein gekrümmter Abschnitt (55a, 55b, 65a) ausgebildet wird und der gekrümmte Abschnitt (55a, 55b, 65a) entlang der Grenze ausgebildet wird.

## Revendications

1. Procédé de fabrication d'un élément métallique, le procédé de fabrication comprenant le pressage d'une première surface (130a) de l'élément métallique par un outil de presse de telle sorte qu'un évidement (136) et une saillie (135) soient respectivement formés sur la première surface (130a) et une seconde surface (130b) d'une tôle (130), le première surface (130a) et la seconde surface (130b) étant perpendiculaires à une direction d'épaisseur de la tôle (130),
le procédé étant **caractérisé en ce qu'**il comprend en outre
la réalisation d'un premier rasage sur la première surface (130a) de l'élément métallique perpendiculaire à la direction d'épaisseur de la tôle (130), dans une première portion (132a) de la tôle (130) en déplaçant une arête tranchante dans une direction le long de la première surface (130a) de telle sorte que la première surface (130a) ait le même plan qu'un fond de l'évidement (136),
dans lequel, dans la tôle (130), une épaisseur de la première portion (132a) est réduite, pour être plus petite qu'une épaisseur d'une seconde portion (132b), par le premier rasage.

2. Procédé de fabrication selon la revendication 1, comprenant en outre la réalisation d'un second rasage sur la seconde surface (130b) perpendiculaire à la direction d'épaisseur de la tôle (130), dans la première portion (132a) de la tôle, en déplaçant l'arête tranchante dans une direction le long de la seconde surface (130b) perpendiculaire à la direction d'épaisseur de la tôle.

3. Procédé de fabrication selon la revendication 1, dans lequel l'arête tranchante (21) a une forme dans laquelle une portion incurvée (55a, 55b, 65a) est formée sur une limite entre la première portion (132a) et la seconde portion (132b) de la tôle (130), et la portion incurvée (55a, 55b, 65a) est formée le long de la limite.
